# EUROPÄISCHE PATENTSCHRIFT

(11) **EP 1 924 377 B1**
(45) Veröffentlichungstag und Bekanntmachung des Hinweises auf die Patenterteilung: **29.07.2009**
(21) Anmeldenummer: 06791981.1
(22) Anmeldetag: 11.09.2006
(51) Int. Cl.: B23B 31/02, B23Q 11/00

(54) **SCHWINGUNGSARMER WERKZEUGHALTER**
LOW-VIBRATION TOOL HOLDER
PORTE-OUTIL EXEMPT DE VIBRATIONS

(30) Priorität: 13.09.2005 DE 102005043626
(43) Veröffentlichungstag der Anmeldung: 28.05.2008
(73) Patentinhaber: Franz Haimer Maschinenbau KG, 86568 Hollenbach-Igenhausen (DE)
(72) Erfinder: HAIMER, Franz, 86568 Igenhausen (DE)
(74) Vertreter: Bockhorni & Kollegen
(86) Internationale Anmeldenummer: PCT/EP2006/008833
(87) Internationale Veröffentlichungsnummer: WO 2007/031256

(56) Entgegenhaltungen:
- DE-A1-9102004 019 86
- DE-A1-0102004 054 55

## Beschreibung

Die vorliegende Erfindung betrifft einen Werkzeughalter für Werkzeuge, insbesondere für Rohr-, Dreh-, Fräs-, Reib- oder Schleifwerkzeuge, gemäß dem Oberbegriff von Anspruch 1.

Derartige Werkzeughalter sind in vielfältiger Art und Weise bekannt. Beispielsweise mit Dehnspannfuttern, Spanntrommeln oder Schrumpffuttern für Werkzeuge mit vorzugsweise zylindrischen Schäften, wobei aber auch Werkzeughalter bekannt sind, die den Werkzeugschaft nicht axial zentral aufnehmen, sondern dieser seitlich, beispielsweise geschraubt befestigt ist.

Durch die Drehung derartiger Werkzeughalter um ihre Längsachse und/oder Einwirkung des mit dem Werkzeug zu bearbeitenden, beispielsweise drehenden Werkstücks auf das Werkzeug und damit den Werkzeughalter und dgl. kann der Werkzeughalter zu Schwingungen, beispielsweise in Form einer Präzäsionsbewegung, um seine ideale Drehachse oder/und zu Transversalschwingungen in einer die Drehachse enthaltenden Eben angeregt werden, wobei auch Mischformen derartiger Schwingungen denkbar sind. Diese Schwingungen stehen einer hohen Präzision, somit Genauigkeit und Reproduzierbarkeit bei der Bearbeitung von Werkstücken entgegen.

In der DE 10 2004 019 869 A1 (siehe z.B. die in Abbildung 1 dargestellte Ausführungsform), von der die vorliegende Erfindung ausgeht wurde zur Schwingungsdämpfung solcher Werkzeughalter vorgeschlagen, dass eine Verspannungsanordnung an dem Werkzeughalter angeordnet wird, die über einen axialen Verspannungsabschnitt eine Verspannkraft in axialer Richtung auf den Werkzeughalter ausübt. Die durch die Verspannungsanordnung in den Werkzeughalter eingetragene axiale Verspannung ändert die Federeigenschaften des Werkzeughalters, insbesondere dessen Federhärte in dem verspannten Axialabschnitt und damit des Werkzeughalters insgesamt gegenüber einem mechanisch unverspannten Zustand, wodurch bei geeigneter Einstellung der Federeigenschaften des Werkzeughalters anregbare Schwingungsformen und ihre zugeordneten Resonanzfrequenzen des Werkzeughalters gezielt verändert werden können.

Obwohl durch diese Maßnahme schon eine deutliche Schwingungsdämpfung des Werkzeughalters erzielt werden kann, kann eine solche Ausführungsform unter bestimmten Umständen Nachteile aufweisen. Bei Verwendung eines Materials für die Verspannungsanordnung, dass gegenüber dem Material des übrigen Werkzeughalters eine geringere Wärmeausdehnung aufweist, besteht die Gefahr, dass sich bei einer Wärmeausdehnung, beispielsweise infolge der Werkstückbearbeitung oder eines thermischen Einspannens oder Entspannens eines Werkzeugschaftes, die Verspannungskraft und damit die Schwingungsdämpfung ändert, die Zentrierung der Verspannungsanordnung bezüglich des Werkzeughalters sich verändert oder gar das Material der Verspannungsanordnung beschädigt wird. Dadurch können wiederum Schwingungen und auch geometrisch bedingte Rundlaufprobleme des Werkzeughalters auftreten, die die Präzision der Werkstückbearbeitung verringern können. Aufgabe der vorliegenden Erfindung ist es demzufolge, einen schwingungsarmen Werkzeughalter bereit zu stellen, der nicht oder wenigstens weniger den obigen Problemen unterliegt, wobei der Werkzeughalter insbesondere einfach zu fertigen sein soll.

Diese Aufgabe wird mit einem Werkzeughalter gemäß Anspruch 1 gelöst, wobei vorteilhafte Ausgestaltungen Gegenstand der abhängigen Ansprüche sind.

Die vorliegende Erfindung zeichnet sich dadurch aus, dass eine Verspannungsanordnung an dem Werkzeughalter vorgesehen ist, die zusätzlich zu einer in axialer Richtung wirkenden Verspannungskraftkomponente eine radiale Verspannungskraftkomponente aufweist, durch die die Verspannungsanordnung gegenüber dem Werkzeughaltergrundkörper radial verspannt ist, wobei dadurch dass die Verspannungsanordnung zumindest an einer auf die Werkzeughalterlängsachse bezogenen Seite ein oder mehrere Stützflächenabschnitte aufweist, die gegen einen bzw. mehrere Gegenflächenabschnitte des Werkzeughaltergrundkörpers anliegen, die Verspannungsanordnung flexibel beispielsweise auf wärmebedingte Materialdehnung durch Gleiten der Stützflächenabschnitte auf den Gegenflächenabschnitten reagieren kann. Auf diese Weise kann zwischen der Verspannungsanordnung und dem Werkzeughaltergrundkörper kein Spiel entstehen, das die axiale Verspannung des Werkzeughalters herabsetzt bzw. zu Rundlaufproblemen führen würde, da die Zentrierung der Verspannungsanordnung gegenüber dem Werkzeughalterrundkörper bei einem solchen Spiel nicht mehr gewährleistet wäre. Außerdem wird durch diese flexible Verspannung der Verspannungsanordnung gegenüber dem Werkzeughaltergrundkörper eine Beschädigung der Versuchsanordnung bzw. des Werkzeughaltergrundkörpers wirksam verhindert.

In einer bevorzugten Ausführungsform ist die Verspannungsanordnung in Bezug auf die Werkzeughalterlängsachse beidseitig radial gegenüber dem Werkzeughaltergrundkörper verspannt. Dadurch wird die Wirksamkeit der Radialverspannung in Bezug auf ihr flexibles Reagieren erhöht. Vorteilhaft besteht der Werkzeughaltergrundkörper im Wesentlichen aus einem Werkzeugstahl und die Verspannungsanordnung aus einer Keramik, einem Schwermetall oder einem Hartmetall bzw. einem Verbundwerkstoff, da dadurch die Verspannungsanordnung wesentlich steifer gehalten ist als der Werkzeugstahl und somit die Federeigenschaften des Werkzeughalters stark beeinflusst werden können. Da bei einer solchen Materialwahl die Verspannungsanordnung einen geringeren Wärmeausdehnungskoeffizienten aufweist als der Werkzeughaltergrundkörper, ist es vorteilhaft, wenn die Verspannungsanordnung gegenüber dem Werkzeughaltergrundkörper radial nach innen verspannt ist, d. h. dass die durch die Verspannungsanordnung in dem Werkzeughaltergrundkörper radial eingetragene Verspannungskraftkomponente nach außen wirkt oder mit anderen Worten die Verspannungsanordnung zumindest partiell näher an der Werkzeughalterlängsachse angeordnet ist als der Werkzeughaltergrundkörper und diese außen liegenden Bereiche des Werkzeughaltergrundkörpers die Verspannungsanordnung in Richtung auf die Werkzeughalterlängsachse zwingen.

In einer besonders bevorzugten Ausführungsform ist der Werkzeughalter dahingehend modular ausgeführt, dass die Verspannungsanordnung zerstörungsfrei entfernbar ist. Auf diese Weise kann die Verspannungsanordnung jederzeit in einfacher Art und Weise ausgetauscht werden und so beispielsweise bei einem Wechsel des Werkzeugs einem verändertem Schwingungsverhalten des Werkzeughalters Rechnung getragen werden. Die modulare Ausführung des Werkzeughalters wird bevorzugt dadurch erreicht, dass das Futter von Mittelteil und Kupplungsschaft des Werkzeughalters lösbar ist, wobei hier insbesondere eine Schraubverbindung vorgesehen ist. Um eine noch größere Variabilität und Anpassbarkeit des Werkzeughalters an verschiedene Werkzeuge zu ermöglichen, ist es vorteilhaft, wenn der Futterkopf, an bzw. in dem die Werkzeugaufnahme angeordnet ist, zusätzlich vom Futter lösbar, insbesondere abschraubbar ist.

In einer bevorzugten Ausführungsform weist der Stützflächenabschnitt der Verspannungsanordnung die Form einer konischen Ringfläche auf und die Verspannungsanordnung hintergreift den Werkzeughaltergrundkörper axial zumindest teilweise. In einer alternativen Ausgestaltung weist der Stützflächenabschnitt die Form einer halbkugelförmigen Ringnut auf, wobei der Gegenflächenabschnitt durch einen halbkugelförmigen Ringvorsprung ausgebildet ist oder durch einzelne in dem Werkzeughaltergrundkörper angeordnete Kugeln bereit gestellt wird. In einer weitern alternativen Ausgestaltung kann der Gegenflächenabschnitt durch einen Zentrierring bereit gestellt sein, der sich seinerseits gegen den Werkzeughaltergrundkörper abstützt. Durch einen solchen Zentrierring kann sowohl die radiale als auch die axiale Verspannung sehr gefühlvoll eingestellt werden. Beispielsweise kann der Zentrierring einen kreisförmigen Querschnitt aufweisen, der gegen einen Stützflächenabschnitt wirkt, der die Gestalt einer halbkugelförmigen Ringnut aufweist.

Eine solche konische Ausbildung könnte mit einem Zentrierring beispielsweise dadurch zur Verfügung gestellt werden, dass der Zentrierring einen rautenförmigen Querschnitt aufweist und die Verspannungsanordnung zwei konisch gegenläufige Ringstützflächen umfasst. Über diese konisch gegenläufige Stützflächengestaltung wird die Verspannungsanordnung an beiden Stützflächen geführt, wodurch die Zentriergenauigkeit noch erhöht wird. Es sind allerdings auch Zentrierringe möglich, die nur eine, beispielsweise konische Gegenfläche bereitstellen.

Vorteilhaft besteht zwischen der Verspannungsanordnung und dem Werkzeughaltergrundkörper zumindest ein Plansitz, der orthogonal in Bezug auf die Längsachse des Werkzeughalters durch plan aufeinander stoßende Flächen der Verspannungsanordnung und des Werkzeughaltergrundkörpers ausgebildet ist. Durch diese Ausgestaltung können größtmögliche axiale Verspannungskräfte auf den Werkzeughaltergrundkörper durch die Verspannungsanordnung übertragen werden. Zur konstruktiven Vereinfachung kann es jedoch auch vorgesehen sein, dass sowohl die axialen als auch die radialen Verspannungskraftkomponenten über konische Ringflächen bereitgestellt werden.

Besonders vorteilhaft, insbesondere bei einer in Bezug auf den Werkzeughaltergrundkörper radial außen liegender Verspannungsanordnung, besteht zumindest zwischen zwei aufeinander zu weisende Flächen von Verspannungsanordnung und Werkzeughaltergrundkörper ein Spiel, wobei hiervon die Flächenbereiche, in denen die Verspannungsanordnung gegen den Werkzeughaltergrundkörper axial bzw. radial verspannt ist, ausgenommen sind. Durch dieses Spiel können auf besonders einfache Weise wärmebedingte Dehnungen ausgeglichen werden, so dass keine Gefahr einer Materialbeschädigung bzw. Zerstörung besteht.

Um das Schwingungsverhalten des Werkzeughalters zusätzlich positiv zu beeinflussen und dadurch den Werkzeughalter schwingungsärmer zu gestalten, sind zwischen Verspannungsanordnung und Werkzeughaltergrundkörper bevorzugt ein oder mehrere Dämpfungselemente vorgesehen, die axiale und/oder radiale Schwingungen des Werkzeughalters bzw. des Werkzeughaltergrundkörpers gegenüber der Verspannungsanordnung und umgekehrt dämpfen.

Weitere Kennzeichen, Merkmale und Vorteile der vorliegenden Erfindung werden im Folgenden anhand der Beschreibung im Zusammenhang mit den Figuren deutlich. Dabei zeigen
- Fig. 1: eine Längsschnittansicht eines Werkzeughalters in einer ersten bevorzugten Ausführungsform,
- Fig. 2: eine Längsschnittansicht des Werkzeughalters aus Fig. 1 in einer Explosionsdarstellung,
- Fig. 3: eine Längsschnittansicht eines Werkzeughalters in einer zweiten bevorzugten Ausführungsform,
- Fig. 4: eine Längsschnittansicht eines Werkzeughalters in einer dritten bevorzugten Ausführungsform,
- Fig. 5: eine Längsschnittansicht eines Werkzeughalters in einer vierten bevorzugten Ausführungsform,
- Fig. 6: eine Längsschnittansicht eines Werkzeughalters in einer fünfte bevorzugten Ausführungsform,
- Fig. 7: eine Längsschnittansicht eines Werkzeughalters in einer sechsten bevorzugten Ausführungsform,
- Fig. 8: eine Längsschnittansicht eines Werkzeughalters in einer siebenten bevorzugten Ausführungsform,
- Fig. 9: eine Längsschnittansicht eines Werkzeughalters in einer achten bevorzugten Ausführungsform,
- Fig. 10: eine Längsschnittansicht eines Werkzeughalters in einer neunten bevorzugten Ausführungsform mit einem eingesetzten Werkzeug,
- Fig. 11: eine Längsschnittansicht eines Werkzeughalters in einer zehnten bevorzugten Ausführungsform mit einem eingesetzten Werkzeug,
- Fig. 12: eine Längsschnittansicht eines Werkzeughalters in einer elften bevorzugten Ausführungsform mit einem eingesetzten Werkzeug,
- Fig. 13: eine Längsschnittansicht eines Werkzeughalters in einer zwölften bevorzugten Ausführungsform,
- Fig. 14: eine Längsschnittansicht eines Werkzeughalters in einer dreizehnten bevorzugten Ausführungsform mit einem eingesetzten Werkzeug und
- Fig. 15: eine Längsschnittansicht eines Werkzeughalters in einer vierzehnten bevorzugten Ausführungsform mit einem eingesetzten Werkzeug.

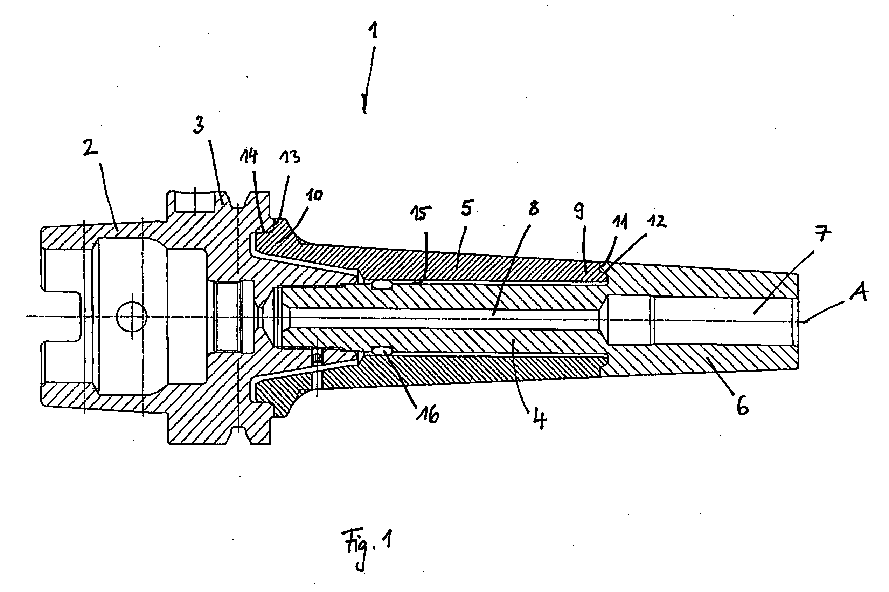

In Fig. 1 ist eine erste bevorzugte Ausführungsform der vorliegenden Erfindung im Längsschnitt dargestellt. Der Werkzeughalter 1 umfasst einen Kupplungsschaft in Form einer Hohlschaftkupplung 2, ein Mittelteil 3 und ein Futter 4, die den Werkzeughaltergrundkörper bilden, sowie eine Verspannungsanordnung 5. Das Futter 4 umfasst einen Futterkopf 6, in dem eine Werkzeugaufnahme 7, zur Schrumpfbefestigung eines zylindrischen Werkzeugschaftes angeordnet ist, und weist einen Kühlmittelkanal 8 auf. Die im Wesentlichen rotationssymmetrische Verspannungsanordnung 5 weist zwei seitliche Enden 9, 10 auf, wobei das vordere Ende 9 das Futter 4 im Bereich des Futterkopfes 6 axial hintergreift und das hintere Ende 10 den Mittelteil 3 axial hintergreift. An diesen beiden Stellen des Hintergreifens bilden sich Sitze 11, 12, 13, 14 aus, an denen Stützflächenbereiche der Verspannungsanordnung 5 an Gegenflächenbereichen des Mittelteils 3 bzw. des Futterkopfes 6 anliegen. Zum einen sind zwei Plansitze 11, 13 ausgebildet, die zum Großteil die axiale Verspannung der Verspannungsanordnung 5 auf Druck zwischen dem Mittelteil 3 und dem Futterkopf 6 bereitstellen. Diese Plansitze 11, 13 umfassen möglichst großflächige Bereiche, damit der Werkzeughalter 1 eine hohe Stabilität, insbesondere Kippstabilität, und Steifigkeit aufweist. Im Beispiel der Fig. 1 ist der Sitz 12 durch zwei konische Ringflächen ausgebildet, so dass hierdurch sich eine radiale Verspannung der Verspannungsanordnung 5 ergibt, wobei die Verspannungsanordnung 5 gegenüber dem Futterkopf 6 radial nach innen verspannt bzw. gezwungen wird. Der Sitz 14 ist im Beispiel der Fig. 1 in Bezug auf die Werkzeughalterlängsachse A zylindrisch ausgeführt und zwar spielfrei oder als Presspassung, wodurch ebenfalls eine Zentrierung der Verspannungsanordnung 5 erfolgt.

Die radiale Verspannung der Verspannungsanordnung 5 gegenüber dem Futterkopf 6 bewirkt eine automatische Zentrierung, die auch im Falle einer Wärmeausdehnung beibehalten wird. Im vorliegenden Fall der Fig. 1 ist die Verspannungsanordnung 5 aus einem schwingungsdämpfenden Material, vorzugsweise Hartmetall, Schwermetall oder Keramik hergestellt und weist gegenüber dem Werkzeughaltergrundkörper, also Kupplungsschaft 2, Mittelteil 3 und Futter 4, einen geringeren Ausdehnungskoeffizienten auf. Bei einer Wärmeausdehnung des Futters 4 erfolgt zwar teilweise eine Entlastung der axialen Verspannung zwischen den beiden Plansitzen 11, 13, jedoch gleitet die Verspannungsanordnung 5 über den Sitz 12 behält aufgrund ihrer radialen Verspannung die Zentrierung bei. Nach einer Abkühlung des Werkzeughalters 1 ziehen sich Werkzeughaltergrundkörper und Verspannungsanordnung 5 jeweils wieder auf ihre Ausgangsmaße zusammen, wobei wiederum der Konussitz 12 ein Aufeinandergleiten der Flächen unter Beibehaltung der Zentrierung ermöglicht.

Um eine größere radiale Wärmeausdehnung des Werkzeughaltergrundkörpers gegenüber der Verspannungsanordnung 5 auszugleichen, ist zwischen dem Werkzeughaltergrundkörper und der Verspannungsanordnung 5 ein axialer Ringspalt 15 vorgesehen. In diesem Ringspalt 15 ist zusätzlich ein ringförmiges Dämpfungselement 16 vorgesehen, das radiale Schwingungen zwischen dem Futter 4 und der Verspannungsanordnung 5 dämpft.

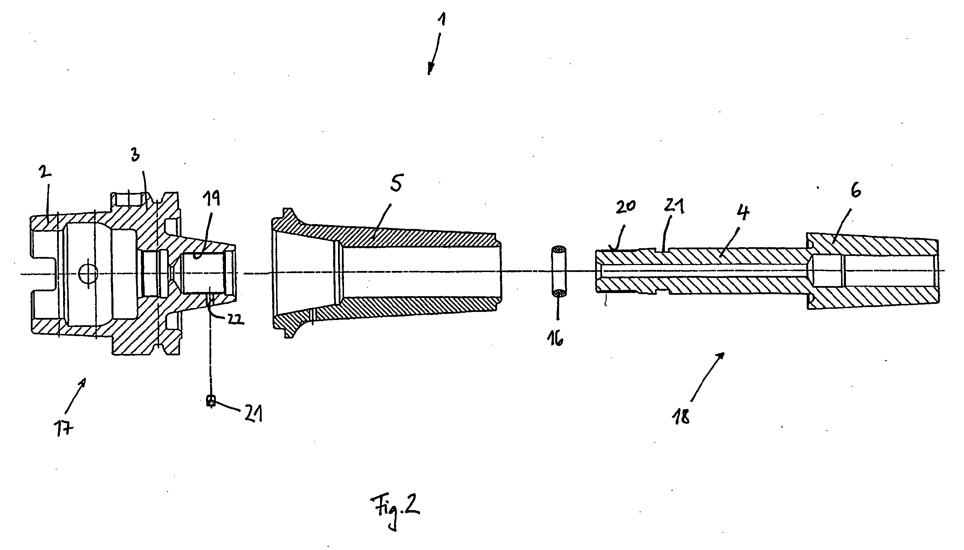

Die Stärke der axialen und radialen Verspannung zwischen Verspannungsanordnung 5 und Werkzeughaltergrundkörper wird über eine Annäherung des Futters 4 gegenüber dem Mittelteil 3 eingestellt, wie im folgenden in Zusammenhang mit Fig. 2 beschrieben wird. Darin ist der Werkzeughalter 1 aus Fig. 1 in einer Explosionsdarstellung gezeigt. Zu erkennen ist, dass der Werkzeughalter 1 modular aufgebaut ist und zwar aus einem ersten Teil 17, das den Kupplungsschaft 2 und das Mittelteil 3 umfasst, einem zweiten Teil 18, das das Futter 4 mit dem Futterkopf 6 umfasst, der Verspannungsanordnung 5 und dem Dämpfungselement 16. Zur lösbaren Vereinigung dieser Teile zum Werkzeughalter 1 weist das erste Teil 17 ein Innengewinde 19 und das zweite Teil 18 ein dazu passendes Außengewinde 20 auf. Nach Anordnung des Dämpfungselements 16 in einer dafür vorgesehenen Ringnut 21 auf dem zweiten Teil 18 wird das Verspannungselement 5 konzentrisch auf das zweite Teil 18 aufgeschoben und das zweite Teil 18 mit dem ersten Teil 17 verschraubt. Durch diese Verschraubung wird die Verspannungsanordnung 5 zwischen dem Mittelteil 3 und dem Futterkopf 6 festgelegt, wobei sich je nach Einschraubungstiefe des zweiten Teils 18 in das erste Teil 17 über die Plansitze 11, 13 und den Konungssitz 12 eine bestimmte axiale und radiale Verspannung des Verspannungselementes 5 gegenüber dem Werkzeughaltergrundkörper einstellt. Zur Beibehaltung dieses Grades der Verspannung, insbesondere auch im Betrieb des Werkzeughalters 1, ist eine Fixierschraube 21 vorgesehen, die in ein entsprechendes Innengewinde 22 des ersten Teils 17 eingreift und durch Anlage an dem zweiten Teil 18 dieses drehmomentfest gegenüber dem ersten Teil 17 fixiert.

Im Gegensatz zu dem in Fig. 1 und Fig. 2 gezeigten Werkzeughalter 1 könnte es auch vorgesehen sein, dass der Sitz 12 als axial zylindrischer Sitz ausgeführt ist und der Sitz 14 als konischer Sitz oder es kann zur Verstärkung der radialen Verspannung vorgesehen sein, dass sowohl Sitz 12 als auch Sitz 14 als konische Sitze ausgeführt sind.

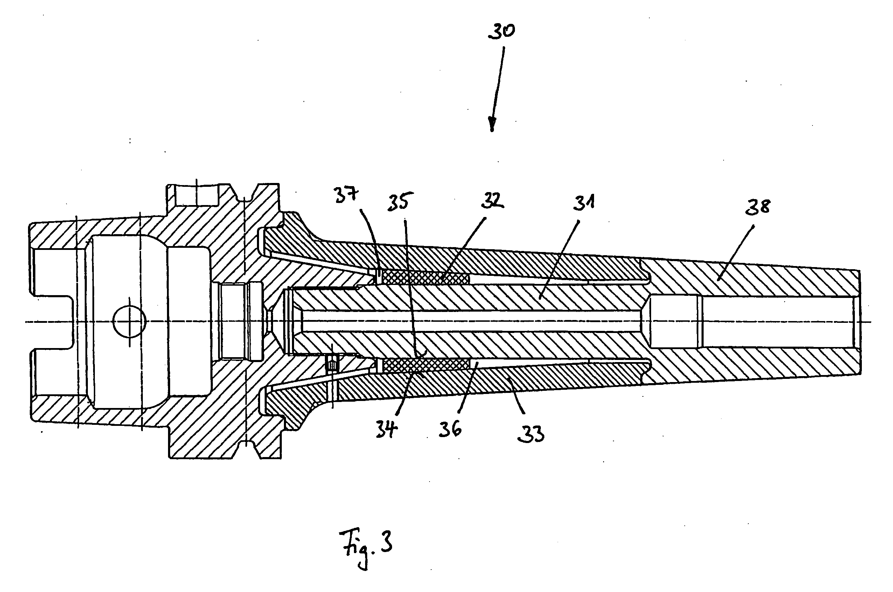

In Fig. 3 ist mit Werkzeughalter 30 eine alternative Ausgestaltung aufgezeigt, wobei der Werkzeughaltergrundkörper im Prinzip dem Werkzeughaltergrundkörper des Werkzeughalters 1 entspricht. Deshalb wird im Folgenden auch bei den anderen Ausführungsformen nur noch dann auf konstruktive Details eingegangen, wenn sie sich wesentlich von denjenigen des Werkzeughalters 1 unterscheiden. Bei Werkzeughalter 30 weist das Futter 31 keine Nut zur Aufnahme des Dämpfungselementes 32 auf und die Verspannungsanordnung 33 weist einen Wandabschnitt 34 auf, der nicht parallel zum Wandabschnitt 35 des Futters 31 verläuft, so dass sich in diesem Bereich ein keilförmiger Ringspalt 36 ausbildet. Durch Wahl der Geometrie des bevorzugt ebenfalls konischen Dämpfungselementes 32 kann es gezielt vorgespannt werden, wodurch seine Dämpfungseigenschaften gezielt eingestellt werden können.

Anstelle des konischen Dämpfungselementes 32 kann der Ringspalt 36 auch mit einem unter Überdruck eingebrachten Dämpfungsfluid oder Dämpfungskunststoff, wie einem Polymer, vollständig gefüllt sein.

Zusätzlich können Mittel vorgesehen sein, mit deren Hilfe die Dämpfungseigenschaften des Dämpfungselementes 32 bzw. eines solchen Dämpfungsfluids oder Dämpfungskunststoffs gezielt beeinflusst werden können. Im Fall eines Dämpfungselementes 32, wie in Fig. 3, könnten diese Mittel beispielsweise durch ein oder mehrere Abstimmscheiben ausgebildet sein, die den Ringspaltabschnitt 37 ausfüllen und dadurch das Dämpfungselemente 32 in dem Ringspalt 36 in Richtung des Futterkopfes 38 zwingen und so durch Komprimierung seine Dämpfungseigenschaften ändern.

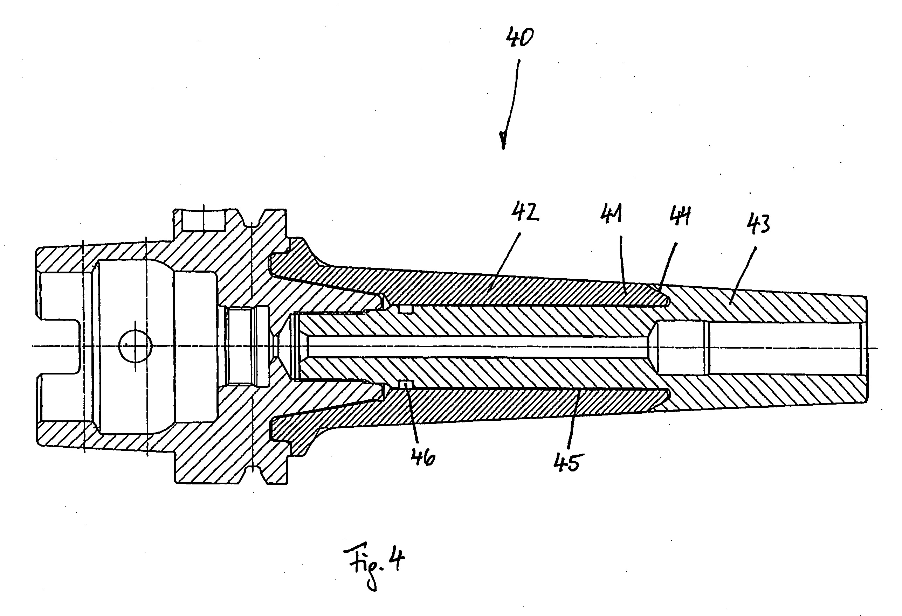

In Fig. 4 ist ein weiteres Ausführungsbeispiel der vorliegenden Erfindung dargestellt. Werkzeughalter 40 entspricht mit folgenden Unterschieden im Wesentlichen den Werkzeughaltern 1 und 30. Zum einen besteht am vorderen Ende 41 der Verspannungsanordnung 42 zwischen der Verspannungsanordnung 42 und dem Futterkopf 43 kein Plansitz sondern nur ein konischer Sitz 44 durch den gleichzeitig eine axiale als auch eine radiale Verspannung der Verspannungsanordnung 42 gegenüber dem Werkzeughaltergrundkörper aufgebaut wird. Diese Ausführungsform ist konstruktiv besonders einfach. Zum anderen ist der Ringspalt 45 wesentlich dünner ausgeführt, was aber völlig ausreichend ist, da die Wärmeausdehnungsunterschiede zwischen dem Material der Verspannungsanordnung 42 und dem Material des Werkzeughaltergrundkörpers nur sehr gering sind. Entsprechend kann auch das Dämpfungselement 46 geringer dimensioniert ausgeführt sein.

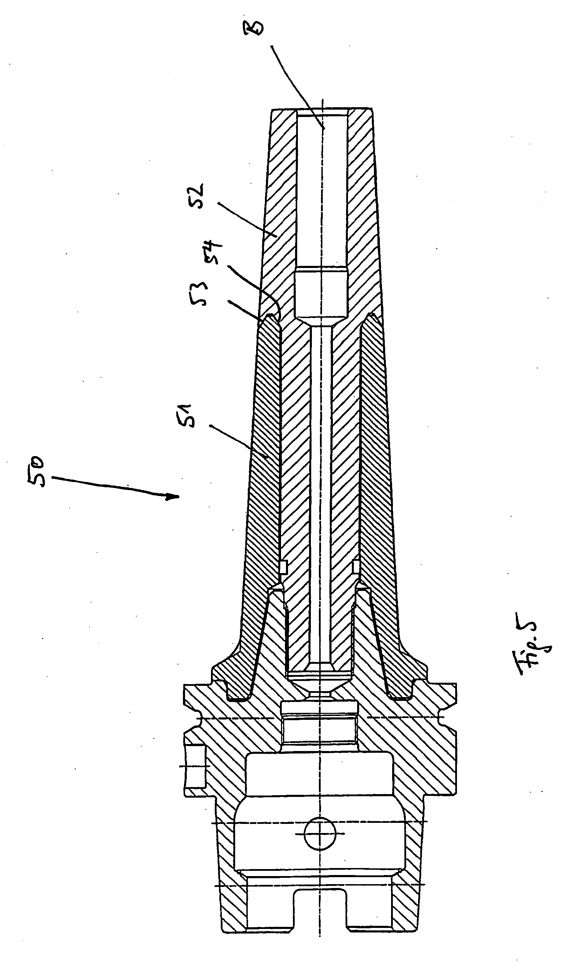

Fig. 5 zeigt einen Werkzeughalter 50, der im Wesentlichen wie der Werkzeughalter 40 der Fig. 4 ausgeführt ist, wobei zwischen der Verspannungsanordnung 51 und dem Futterkopf 52 zwei Konussitze 53, 54 bestehen, wobei der erste Konussitz 53 durch konische Ringflächen gebildet werden, die gegenüber den den Konussitz 54 bildenden konischen Ringflächen gegenläufig angeordnet sind. Durch diesen zweifachen Konussitz 53, 54 wird eine besonders exakte Zentrierung der Verspannungsanordnung 51 gegenüber der Werkzeughalterlängsachse B erreicht, die auch bei einer Wärmedehnung sehr beständig ist.

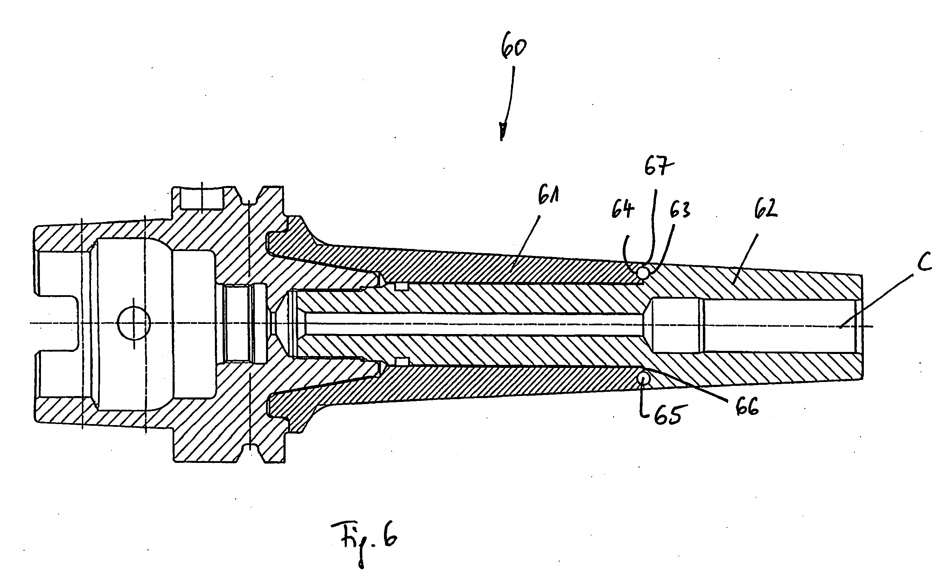

Die Fig. 6 bis Fig. 9 zeigen ähnliche Ausführungsformen wie Fig. 4 und Fig. 5, wobei jeweils nur der Stoßbereich zwischen Verspannungsanordnung und Futterkopf anders gestaltet wurde.

In Fig. 6 weisen sowohl die Verspannungsanordnung 61 als auch der Futterkopf 62 zur Werkzeughalterlängsachse C senkrecht orientierte und aufeinander zu weisende halbkreisförmige Ringnuten 63, 64 auf, die in Formschluss mit einer Zentrierung 65 stehen, die als durchgehender Zentrierring ausgeführt sein kann oder in Form von einzelnen Kugeln. Die Stoßflächenbereiche 66, 67 zwischen der Verspannungsanordnung 61 und dem Futterkopf 62 können so gestaltet sein, dass sich entweder ein Plansitz oder ein Planspiel ergibt.

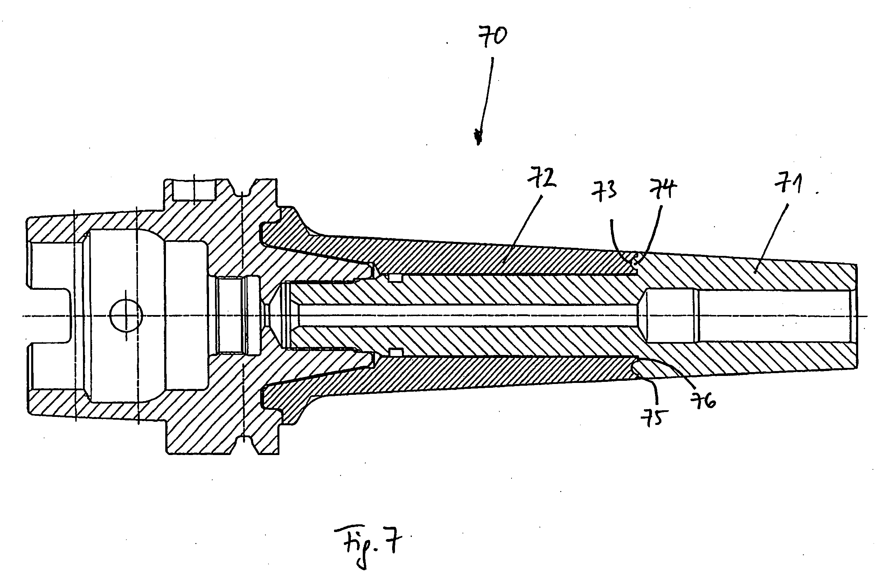

Der Stoßbereich von Werkzeughalter 70 in Fig. 7 entspricht im Wesentlichen dem Stoßbereich von Werkzeughalter 60, wobei die Zentrierung 65 des Werkzeughalters 60 bei Werkzeughalter 70 quasi in den Futterkopf 71 mit aufgenommen wurde. Genauer gesagt weist die Verspannungsanordnung 72 wiederum eine halbkreisförmige Ringnut 73 auf, in die eine halbkreisförmige Ringwulst 74 des Futterkopfes 71 formschlüssig eingreift. Wiederum können die Stoßflächenbereiche 75, 76 mit Plansitz oder Planspiel ausgeführt sein.

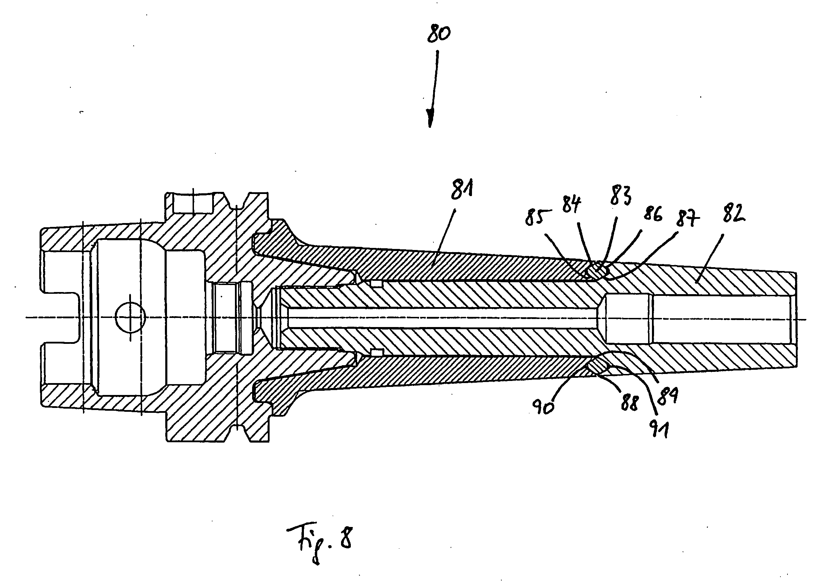

Der Stoßbereich des in Fig. 8 dargestellten Werkzeughalters 80 weist zwischen Verspannungsanordnung 81 und Futterkopf 82 einen rautenförmigen Zentrierring 83 auf, der formschlüssig in entsprechende konische Ringflächen 84, 85, 86, 87 der Verspannungsanordnung 81 und des Futterkopfes 82 eingreift. Wiederum können die Stoßflächenbereiche 88, 89 mit Plansitz oder Planspiel ausgeführt sein. In den Bereichen 90, 91 ist zwischen Verspannungsanordnung 81 und Zentrierring 83 bzw. Zentrierring 83 und Futterkopf 82 ein Spiel vorgesehen, das geeignet ist, Wärmedehnung zu kompensieren und ein Verkeilen des Zentrierrings 83 zwischen den gegenläufigen konischen Ringflächen 84, 85, 86, 87 der Verspannungsanordnung 81 bzw. des Futterkopfes 82 zu verhindern.

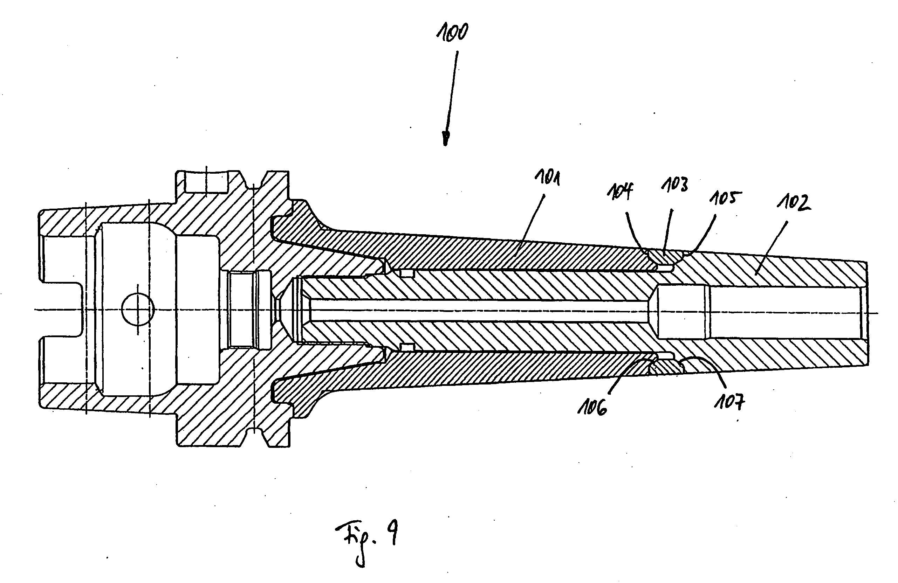

Schließlich weist der in Fig. 9 dargestellte Werkzeughalter 100 zwischen der Verspannungsanordnung 101 und dem Futterkopf 102 einen Zentrierring 103 auf, der sowohl gegenüber der Verspannungsanordnung 101 als auch gegenüber dem Futterkopf 102 einen Plansitz 104, 105 und zusätzlich auch jeweils einen Konussitz 106, 107 beistellt.

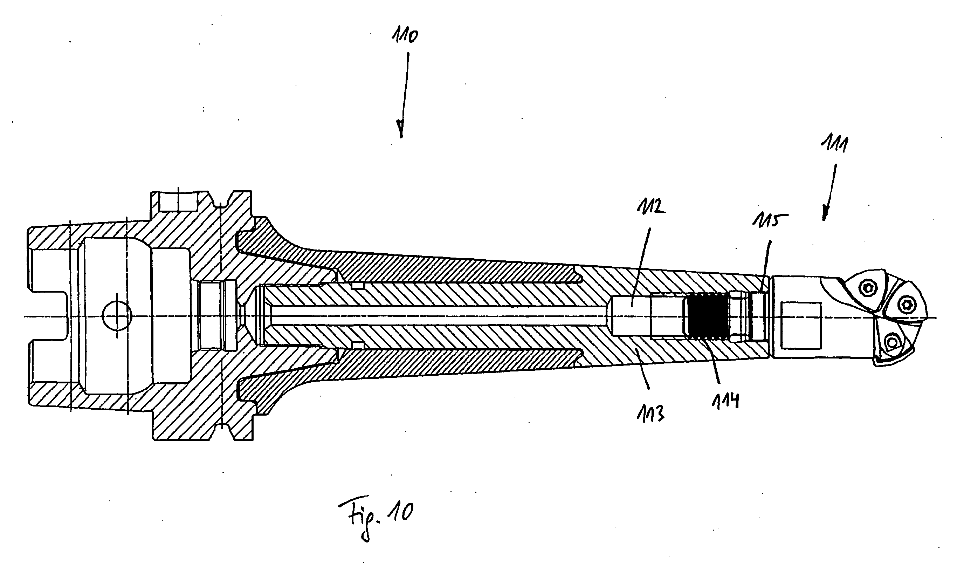

Die Fig. 10 bis Fig. 15 zeigen verschiedene Werkzeughalter entsprechend der vorliegenden Erfindung teilweise mit daran befestigten Werkzeugen.

In dem in Fig. 10 dargestelltem Werkzeughalter 110 ist ein Fräser 111 aufgenommen, der der Werkzeugaufnahme 112 des Futterkopfes 113 über eine Schraubverbindung 114 festgelegt ist und gegenüber dem Futterkopf 113 einen zylindrischen Passsitz 115 aufweist.

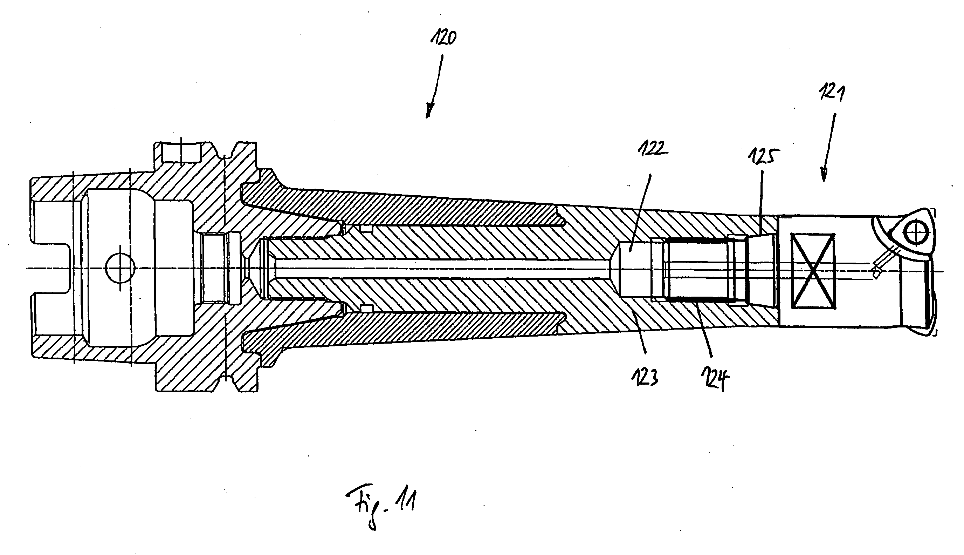

In Fig. 11 ist ein Werkzeughalter 120 dargestellt, in dem ein anders gestaltetes Fräswerkzeug 121 in der Werkzeugaufnahme 122 des Futterkopfes 123 über eine Schraubverbindung 124 festgelegt ist. In diesem Fall weist das Fräswerkzeug 121 gegenüber dem Futterkopf 123 einen konischen Passsitz 125 auf.

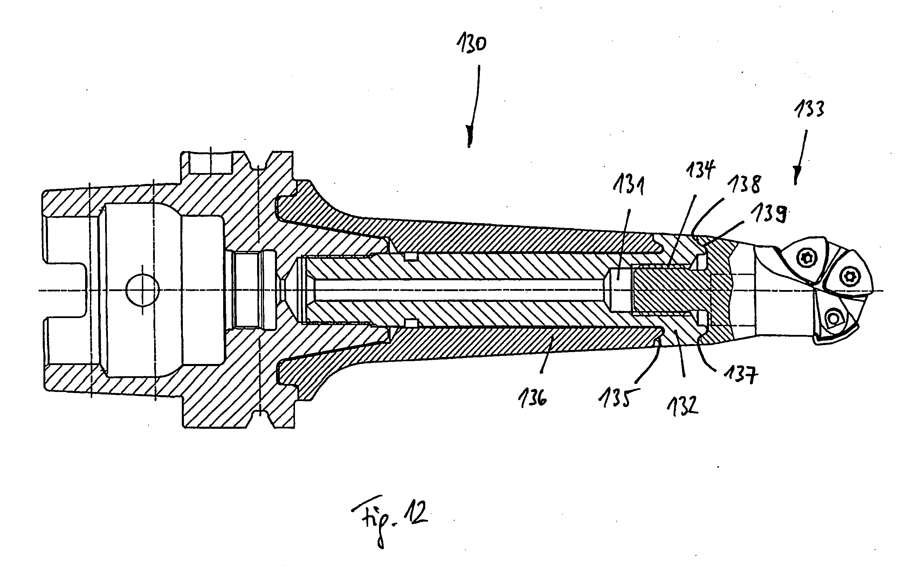

In Fig. 12 ist ein Werkzeughalter 130 gezeigt, in dessen Werkzeugaufnahme 131 des Futterkopfes 132 ein Fräswerkzeug 133 aufgenommen und über eine Schraubverbindung 134 festgelegt ist. Ähnlich wie die Verspannungsschnittstelle 135 zwischen Verspannungsanordnung 136 und Futterkopf 132 besteht auch zwischen Futterkopf 132 und Fräswerkzeug 133 eine Verspannungsschnittstelle 137, die einen Plansitz 138 und einen Konussitz 139 aufweist. Zur Erzeugung verschiedener Verspannungen kann die Verspannungsschnittstelle 137 entweder einen konkaven oder konvexen Konussitz 139 aufweisen.

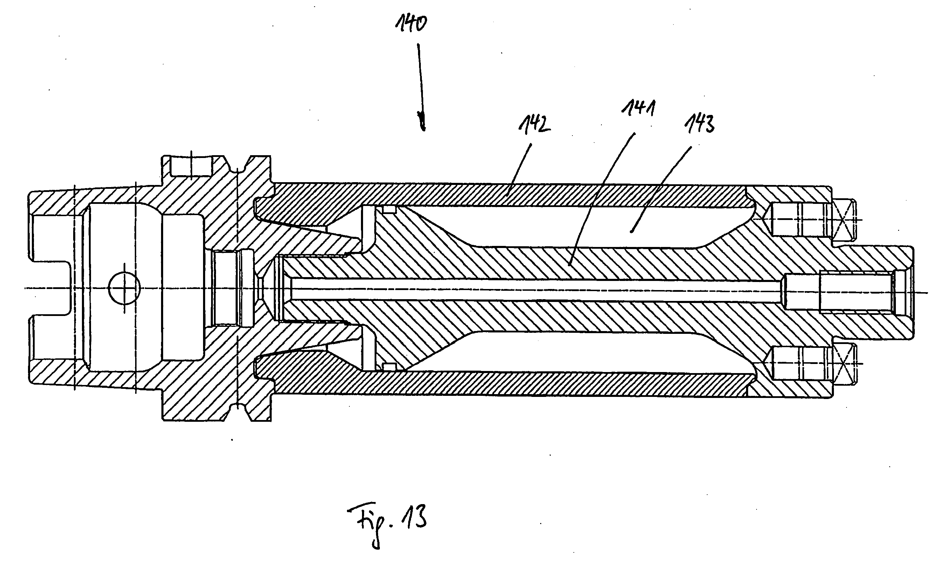

In Fig. 13 ist eine weitere Ausführungsform eines Werkzeughalters 140 aufgezeigt, bei dem zwischen Futter 141 und Verspannungsanordnung 142 ein relativ großer Ringspalt 143 vorgesehen ist, welcher eine Druckkammer bildet, die gegebenenfalls mit einem fließfähigen oder plastisch deformierbaren Druckmedium gefüllt sein kann. Werkzeughalter 140 ist zur Aufnahme von Werkzeugen aller Formen und Typen geeignet, wie z. B. einem Messerkopf oder einem Aufsteckfräser.

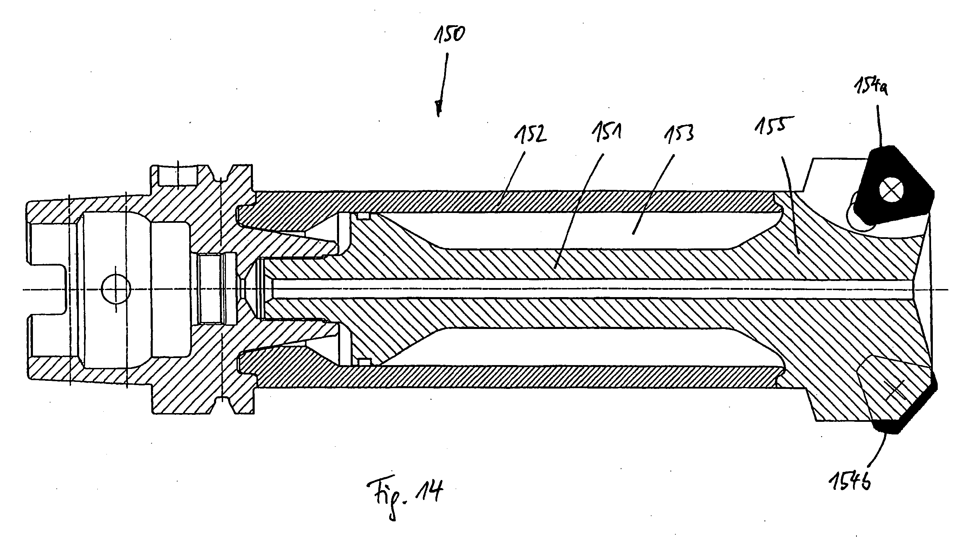

In Fig. 14 ist ein ähnlicher Werkzeughalter 150 dargestellt, der wie Werkzeughalter 140 zwischen Futter 151 und Verspannungsanordnung 152 einen relativ großen Ringspalt 153 aufweist. An Werkzeughalter 150 sind rotationssymmetrisch zwei wechselbare Schneidwerkzeuge 154a, 154b direkt am Futterkopf 155 festgelegt.

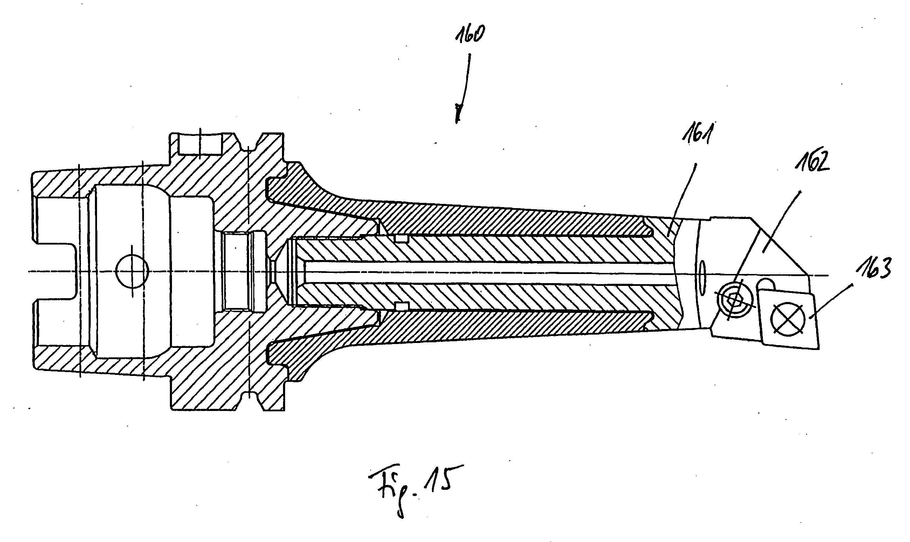

Schließlich zeigt Fig. 15 einen Werkzeughalter 160 an dessen Futterkopf 161 ein Drehwerkzeughalter 162 direkt befestigt ist und an dem Drehwerkzeughalter 162 ein Drehwerkzeug 163 angeordnet ist.

Aus dem vorstehenden ist deutlich geworden, dass ein Werkzeughalter 1,30,40,50,60,70,80,100,110,120,140,150,160 gemäß der vorliegenden Erfindung nicht nur wesentlich schwingungsärmer als bekannte Werkzeughalter ist, sondern auch im Betrieb und insbesondere bei wärmebedingten Materialdehnungen einen wesentlich besseren Rundlauf garantiert, da die in dem Werkzeughalter 1,30,40,50,60,70,80,100,1.10,120,140,150,160 integrierte Verspannungsanordnung 5,33,42,51,61,71,81,101,136,142,152 ständig gegenüber dem Werkzeughaltergrundkörper zentriert ist. Außerdem ist deutlich geworden, dass ein solcher Werkzeughalter 1,30,40,50,60,70,80,100,110,120,140,150,160, insbesondere in einer modularen Ausführung, sehr flexibel an unterschiedliche Werkzeugarten 111,121,133,154a,154b,163 und Werkstückbearbeitungsvorgänge angepasst werden kann.

## Patentansprüche

1. Werkzeughalter (1) für Werkzeuge, insbesondere für Rohr-, Dreh-, Fräs-, Reib- oder Schleifwerkzeuge,
mit einem Werkzeughaltergrundkörper (2, 3, 4, 6), der
einen Schaft (2) zur Kupplung des Werkzeughalters (1) mit einer Werkzeugmaschine,
ein Futter (4), insbesondere Dehnspann- oder Schrumpffutter, mit einem Futterkopf (6) und einer Aufnahme (7) zur drehmomentfesten Fixierung des Werkzeugs, und
ein Mittelteil (3), das zwischen Kupplungsschaft (2) und Futter (4) angeordnet ist, umfasst
und mit einer Verspannungsanordnung (5), die zwischen Kupplungsschaft (2) und Futterkopf (6) angeordnet ist und zumindest im Betrieb des Werkzeughalters (1) in einem axialen Verspannungsabschnitt des Werkzeughalters (1) eine Verspannkraft mit einer in axialer Richtung wirkenden Verspannungskraftkomponente ausübt,
**dadurch gekennzeichnet, dass**
die Verspannungsanordnung (5) zumindest an einer auf die Werkzeughalterlängsachse (A) bezogenen Seite (9) einen oder mehrere Stützflächenabschnitte aufweist, die sich gegen einen bzw. mehrere Gegenflächenabschnitte des Werkzeughaltergrundkörpers (2, 3, 4, 6) radial verspannt abstützen, wobei die Stützflächenabschnitte an den Gegenflächenabschnitten verschiebbar anliegen.

2. Werkzeughalter (1) gemäß Anspruch 1, **dadurch gekennzeichnet, dass** die Verspannungsanordnung (5) in Bezug auf die Werkzeughalterlängsachse (A) an beiden Seiten (9, 10) radial verspannt ist.

3. Werkzeughalter (1) gemäß Anspruch 1 oder 2, **dadurch gekennzeichnet, dass** die Verspannungsanordnung (5) gegenüber dem Werkzeughaltergrundkörper (2, 3, 4, 6) radial nach innen verspannt ist.

4. Werkzeughalter (1) gemäß einem der vorherigen Ansprüche, **dadurch gekennzeichnet, dass** der Werkzeughalter (1) dahingehend modular ausgeführt ist, dass die Verspannungsanordnurig (5) zerstörungsfrei entfernbar ist.

5. Werkzeughalter (1) gemäß Anspruch 4, **dadurch gekennzeichnet, dass** das Futter (4) von Mittelteil (3) und Kupplungsschaft (2) lösbar, insbesondere abschraubbar ist.

6. Werkzeughalter (1) gemäß Anspruch 4 oder 5, **dadurch gekennzeichnet, dass** das Futter (4) einen lösbaren, insbesondere abschraubbaren, Futterkopf (6) aufweist.

7. Werkzeughalter (1) gemäß einem der vorherigen Ansprüche, **dadurch gekennzeichnet, dass** der Stützflächenabschnitt die Form einer konischen Ringfläche aufweist und die Verspannungsanordnung (5) den Werkzeughaltergrundkörper (6) axial zumindest teilweise hintergreift.

8. Werkzeughalter (60; 70) gemäß einem der Ansprüche 1 bis 6, **dadurch gekennzeichnet, dass** der Stützflächenabschnitt die Form einer halbkugelförmigen Ringnut (63; 73) aufweist und der Gegenflächenabschnitt durch einen halbkugelförmigen Ringvorsprung (74) ausgebildet ist oder durch einzelne in dem Werkzeughaltergrundkörper (62) angeordnete Kugeln (65) bereit gestellt wird.

9. Werkzeughalter (60; 80; 100) gemäß einem der Ansprüche 1 bis 7, **dadurch gekennzeichnet, dass** der Gegenflächenabschnitt durch einen Zentrierring (65; 83; 103) bereitgestellt wird, der seinerseits in dem Werkzeughaltergrundkörper (62; 82; 102) aufgenommen ist.

10. Werkzeughalter (60) gemäß Anspruch 9, **dadurch gekennzeichnet, dass** der Zentrierring (65) einen kreisförmigen Querschnitt aufweist und der Stützflächenabschnitt die Gestalt einer halbkugelförmigen Ringnut (63) aufweist.

11. Werkzeughalter (80) gemäß Anspruch 9, **dadurch gekennzeichnet, dass** der Zentrierring (83) einen rautenförmigen Querschnitt aufweist und die Verspannungsanordnung (81) zwei konisch gegenläufige Ringstützflächen (84, 85) umfasst.

12. Werkzeughalter (1) gemäß einem der vorherigen Ansprüche, **dadurch gekennzeichnet, dass** zwischen Verspannungsanordnung (5) und Werkzeughaltergrundkörper (3, 6) zumindest ein Plansitz (11, 13) besteht, der orthogonal in Bezug auf die Längsachse (A) des Werkzeughalters durch plan aufeinander stoßende Flächen der Verspannungsanordnung (5) und des Werkzeughaltergrundkörpers (3, 6) gebildet ist.

13. Werkzeughalter (30) gemäß einem der vorherigen Ansprüche, **dadurch gekennzeichnet, dass** zumindest zwischen zwei aufeinander zu weisenden Flächen (34, 35) von Verspannungsanordnung (33) und Werkzeughaltergrundkörper (31) mit Ausnahme der Bereiche, in denen die Verspannungsanordnung gegen den Werkzeughaltergrundkörper axial bzw. radial verspannt ist, ein Spiel (36) besteht.

14. Werkzeughalter (1; 30) gemäß einem der vorherigen Ansprüche, **dadurch gekennzeichnet, dass** zwischen Verspannungsanordnung (5; 33) und Werkzeughaltergrundkörper (4; 31) ein oder mehrere Dämpfungselemente (16; 32) zur Dämpfung von axialen und/oder radialen Schwingungen angeordnet sind.

15. Werkzeughalter (1; 30) gemäß Anspruch 14, **dadurch gekennzeichnet, dass** die ein oder mehreren Dämpfungselemente (16; 32) im Ringspalt (15; 36) angeordnet sind und diesen vorzugsweise als unter Druck stehendes Druckmittel, insbesondere einem Dämpfungsfluid oder Dämpfungskunststoff, vollständig ausfüllen.

16. Werkzeughalter (1; 30) gemäß Anspruch 14 oder 15, **dadurch gekennzeichnet, dass** weiterhin Mittel, insbesondere Abstimmscheiben, zur Einstellung der Dämfungseigenschaften des oder der Dämpfungselemente (5; 32) vorgesehen sind.

## Claims

1. A tool holder (1) for tools, particularly for tube, lathe, milling, reaming or grinding tools, including a tool holder base body (2, 3, 4, 6), which includes a shaft (2) for coupling the tool holder (1) to a machine tool, a chuck (4), particularly a hydraulic expansion chuck or a contracting chuck, with a chuck head (6) and collet (7) for the torque-resistant fixing of the tool and a central portion (3), which is arranged between the coupling shaft (2) and the chuck (4), and including a clamping assembly (5), which is arranged between the coupling shaft (2) and chuck head (6) and, at least in operation of the tool holder (1), exerts a clamping force in an axial clamping section of the tool holder (1) with a clamping force component acting in the axial direction, **characterised in that,** at least on one side (9) with respect to the tool holder longitudinal axis (A), the clamping device has one or more support surface sections, which bear radially stressed against one or more opposing surface sections of the tool holder base body (2, 3, 4, 6), wherein the support surface sections movably engage the opposing surface sections.

2. A tool holder (1) as claimed in Claim 1, **characterised in that** the clamping assembly (5) is radially clamped on both sides (9, 10) with respect to the tool holder longitudinal axis (A).

3. A tool holder (1) as claimed in Claim 1 or 2, **characterised in that** the clamping arrangement (5) is stressed radially inwardly with respect to the tool holder base (2, 3, 4, 6).

4. A tool holder (1) as claimed in one of the preceding claims, **characterised in that** the tool holder (1) is of modular construction such that the clamping assembly (5) may be removed without destroying it.

5. A tool holder (1) as claimed in Claim 4, **characterised in that** chuck (4) is releasable, particularly unscrewable, from the central portion (3) and coupling shaft (2).

6. A tool holder (1) as claimed in Claim 4 or 5, **characterised in that** the chuck (4) has a releasable, particularly unscrewable, chuck head (6).

7. A tool holder (1) as claimed in one of the preceding claims, **characterised in that** the support surface section has the form of a conical annular surface and the clamping assembly (5) engages at least partially axially behind the tool holder base body (6).

8. A tool holder (60; 70) as claimed in one of Claims 1 to 6, **characterised in that** the support surface section has the form of a hemispherical annular groove (63; 73) and the opposing surface section is constituted by a hemispherical annular projection (74) or is provided by individual bores (65) provided in the tool holder base body (62).

9. A tool holder (60; 80; 100) as claimed in Claims 1 to 7, **characterised in that** the opposing surface section is provided by a centering ring (65; 83; 103), which is received for its part in the tool holder base body (62; 82; 102).

10. A tool holder (60) as claimed in Claim 9, **characterised in that** the centering ring (65) has a circular cross section and the support surface section has the shape of a hemispherical annular groove (63).

11. A tool holder (80) as claimed in Claim 9, **characterised in that** the centering ring (83) has a rhomboidal cross section and the clamping assembly (81) includes two conical oppositely directed annular support surface (84, 85).

12. A tool holder (1) as claimed in one of the preceding claims, **characterised in that** between the clamping assembly (5) and the tool holder base body (3, 6) there is at least one flat seat (11, 13), which is defined orthogonally with respect to the longitudinal axis (A) of the tool holder by flat abutting surfaces of the clamping assembly (5) and of the tool holder base body (3, 6).

13. A tool holder (30) as claimed in one of the preceding claims, **characterised in that** there is a clearance (36) at least between two surfaces (34, 35), directed towards one another of the clamping assembly (33) and the tool holder base body (31) with the exception of the regions in which the clamping assembly is axially or radially clamped against the tool holder base body.

14. A tool holder (1; 30) as claimed in one of the preceding claims, **characterised in that** one or more damping elements (16; 32) for damping axial and/or radial vibrations are arranged between the clamping assembly (5; 33) and the tool holder base body (4; 31).

15. A tool holder (1; 30) as claimed in Claim 14, **characterised in that** the one or more damping elements (16; 32) are arranged in the annular gap (15; 36) and completely fill it, preferably in the form of a pressurised pressure medium, particularly a damping fluid or damping plastic material.

16. A tool holder (1; 30) as claimed in Claim 14 or 15, **characterised in that** means, particularly adjustment washers, are provided for adjusting the damping characteristics of the damping element(s) (5; 32).

## Revendications

1. Porte-outil (1) pour des outils, en particulier pour des outils de tube, des outils de tournage, de fraisage, à friction ou de meulage,
avec un corps de base (2, 3, 4, 6) pour le porte-outil, lequel comprend
une tige (2) pour accoupler le porte-outil (1) à une machine-outil,
un mandrin (4), en particulier un mandrin à serrage par rotation ou un mandrin à contraction, comprenant une tête de mandrin (6) et un logement (7) afin de fixer l'outil solidairement vis-à-vis des couples de rotation, et
une partie médiane (3) agencée entre la tige d'accouplement (2) et le mandrin (4), et
avec un agencement de serrage (5), qui est agencé entre la tige d'accouplement (2) et la tête de mandrin (6) et exerce, au moins en service du porte-outil (1) dans un tronçon de serrage axial du porte-outil (1) une force de serrage avec une composante de force de serrage agissant en direction axiale,
**caractérisé en ce que**
l'agencement de serrage (5) comprend, au moins sur un côté (9) par rapport à l'axe longitudinal (A) du porte-outil, un ou plusieurs tronçons de surface de soutien qui s'appuient avec serrage radial contre un ou plusieurs tronçons de surface antagonistes du corps de base (2, 3, 4, 6) du porte-outil, et les tronçons de surface de soutien sont appliqués avec possibilité de translation contre les tronçons de surface antagonistes.

2. Porte-outil (1) selon la revendication 1, **caractérisé en ce que** l'agencement de serrage (5) est serré radialement sur les deux côtés (9, 10) par rapport à l'axe longitudinal (A) du porte-outil.

3. Porte-outil (1) selon la revendication 1 ou 2, **caractérisé en ce que** l'agencement de serrage (5) est serré radialement vers l'intérieur par rapport au corps de base (2, 3, 4, 6) du porte-outil.

4. Porte-outil (1) selon l'une des revendications précédentes, **caractérisé en ce que** le porte-outil (1) est réalisé de manière modulaire **en ce que** l'agencement de serrage (5) peut être supprimé sans destruction.

5. Porte-outil (1) selon la revendication 4, **caractérisé en ce que** le mandrin (4) peut être détaché, en particulier dévissé, de la partie médiane (3) et de la tige d'accouplement (2).

6. Porte-outil (1) selon la revendication 4 ou 5, **caractérisé en ce que** le mandrin (4) comprend une tête de mandrin (6) détachable, en particulier dévissable.

7. Porte-outil (1) selon l'une des revendications précédentes, **caractérisé en ce que** le tronçon de surface de soutien présente la forme d'une surface annulaire conique, et l'agencement de serrage (5) engage le corps de base (7) du porte-outil par l'arrière axialement au moins partiellement.

8. Porte-outil (60 ; 70) selon l'une des revendications 1 à 6, **caractérisé en ce que** le tronçon de surface de soutien présente la forme d'une gorge annulaire (63 ; 73) de forme hémisphérique, et le tronçon de surface antagoniste est formé par une saillie annulaire (74) de forme hémisphérique ou est constitué par des billes individuelles (65) agencées dans le corps de base (62) du porte-outil.

9. Porte-outil (60 ; 80 ; 100) selon l'une des revendications 1 à 7, **caractérisé en ce que** le tronçon de surface antagoniste est formé par une bague de centrage (65 ; 83 ; 103), laquelle est reçue de son côté dans le corps de base (62 ; 82 ; 102) du porte-outil.

10. Porte-outil (60) selon la revendication 9, **caractérisé en ce que** la bague de centrage (65) présente une section transversale de forme circulaire, et le tronçon de surface de soutien présente la configuration d'une gorge annulaire (63) de forme hémisphérique.

11. Porte-outil (80) selon la revendication 9, **caractérisé en ce que** la bague de centrage (83) présente une section transversale en forme de losange, et l'agencement de serrage (81) comporte deux surfaces de soutien annulaires (84, 85) coniques en sens opposés.

12. Porte-outil (1) selon l'une des revendications précédentes, **caractérisé en ce que,** entre l'agencement de serrage (5) et le corps de base (3, 6) du porte-outil il existe au moins un siège plan (11, 13) qui est formé perpendiculairement par rapport à l'axe longitudinal (A) du porte-outil par des surfaces, en butée à plat l'une contre l'autre, de l'agencement de serrage (5) et du corps de base (3, 6) du porte-outil.

13. Porte-outil (30) selon l'une des revendications précédentes, **caractérisé en ce que,** au moins entre deux surfaces (34, 35) tournées l'une vers l'autre, de l'agencement de serrage (33) et du corps de base (31) du porte-outil, à l'exception des zones dans lesquelles l'agencement de serrage est serré axialement ou radialement contre le corps de base du porte-outil, il est prévu un jeu (36).

14. Porte-outil (1 ; 30) selon l'une des revendications précédentes, **caractérisé en ce que,** entre l'agencement de serrage (5 ; 33) et le corps de base (4 ; 31) du porte-outil, sont agencés un ou plusieurs éléments d'amortissement (16 ; 32) pour amortir des oscillations axiales et/ou radiales.

15. Porte-outil (1 ; 30) selon la revendication 14, **caractérisé en ce que** lesdits un ou plusieurs éléments d'amortissement (16 ; 32) sont agencés dans la fente annulaire (15 ; 36) et remplissent de préférence totalement ce dernier, sous la forme d'un moyen de pression sous pression, en particulier d'un fluide d'amortissement ou d'une matière synthétique d'amortissement.

16. Porte-outil (1 ; 30) selon la revendication 14 ou 15, **caractérisé en ce qu'**il est en outre prévu des moyens, en particulier des disques d'accord, pour régler les propriétés d'amortissement du ou des éléments d'amortissement (5 ; 32).
